Europäisches Patentamt

**European Patent Office**

**Office européen des brevets**

(19)

(11) Numéro de publication : **0 003 700**
**B1**

(12)

# FASCICULE DE BREVET EUROPÉEN

(45) Date de publication du fascicule du brevet :
**29.07.81**

(51) Int. Cl.³ : **F 16 L 55/04**, F 17 D 1/20

(21) Numéro de dépôt : **79400068.7**

(22) Date de dépôt : **01.02.79**

(54) **Réservoir anti-béler à régulation d'air automatique.**

(30) Priorité : 06.02.78 FR 7803197

(43) Date de publication de la demande :
**22.08.79 (Bulletin 79/17)**

(45) Mention de la délivrance du brevet :
**29.07.81 Bulletin 81/30**

(84) Etats contractants désignés :
**BE CH DE GB IT LU NL SE**

(56) Documents cités :
**DE - C - 576 413**
**FR - A - 850 673**
**GB - A - 996 845**
**US - A - 1 549 260**
**US - A - 3 146 796**

(73) Titulaire : **Roche, Emile**
**20, Rue de la Côte-d'Azur**
**F-67100 Strasbourg (FR)**

(72) Inventeur : **Roche, Emile**
**20, Rue de la Côte-d'Azur**
**F-67100 Strasbourg (FR)**

(74) Mandataire : **Petit, Alain et al**
**OFFICE JOSSE & PETIT 126 Boulevard Haussmann**
**F-75008 Paris (FR)**

Imprimerie Jouve, 17, rue du Louvre, 75001 Paris, France

## Réservoir anti-bélier à régulation d'air automatique

La présente invention est relative à un réservoir anti-bélier à régulation d'air automatique pour les fluides liquides chargés ou non (eaux potables, eaux d'irrigation, eaux usées, fluides chimiques, pétro-chimiques, synthétiques, etc.).

On connaît déjà différents types de réservoirs anti-béliers avec compresseurs d'air, à vessies, à membranes, soupapes anti-béliers ou autres servant à la régulation de divers circuits ou réseaux hydrauliques. La plupart de ces dispositifs sont d'un prix élevé et particulièrement adaptés à des liquides non chargés.

S'agissant de liquides chargés, ils présentent les inconvénients suivants :

— encrassement des électrodes nécessaires pour les ballons sans vessie ni membrane ;

— risque d'érosion ou de coupure de la vessie ou de la membrane lorsque ces ballons en comportent ;

— risque de dépôts sur la grille anti-extrusion disposée généralement à l'entrée du ballon.

Il est également connu d'utiliser, en aval d'une pompe de refoulement, des réservoirs en charge munis d'une soupape d'entrée d'air communiquant avec l'atmosphère.

Ces réservoirs ont de graves inconvénients :

— à la vidange, pendant la période de dépression après une fermeture brusque de la pompe, ils se comportent comme une simple charge puisque la soupape ou organe de fermeture s'ouvre dès le début de la vidange, mettant ainsi la surface du liquide en contact avec l'atmosphère ;

— au remplissage, correspondant à la période de surpression, il n'y a aucun volume d'air pour écréter les surpressions lorsque l'organe de fermeture se ferme brutalement sous la poussée du liquide, et cela notamment au démarrage lorsque la pompe commençant à fonctionner travaille sur la partie droite de sa caractéristique, c'est-à-dire à fort débit.

La présente invention remédie aux inconvénients précités des anti-béliers antérieurement connus et elle vise à la réalisation d'un appareil d'une construction simple, d'une mise en place aisée et dont le volume et les caractéristiques de fonctionnement peuvent être modifiés facilement.

L'invention vise un dispositif de type réservoir anti-bélier dans lequel la régulation d'air s'effectue de façon automatique. Il se caractérise principalement par la disposition à l'intérieur du réservoir d'un tube plongeant qui débouche au sommet dudit réservoir par un orifice muni d'une soupape d'entrée d'air, mais se fermant sous la poussée du liquide.

La longueur de ce tube est calculée de façon à déterminer tout autour de lui, à l'intérieur du réservoir, une chambre de compression dont le volume correspond à celui qui est nécessaire pour assurer la protection de l'installation.

La soupape s'ouvrant à chaque dépression et se fermant au remplissage permet la correction automatique du volume d'air enfermé dans la chambre de compression. Ceci remédie à la dissolution de l'air dans le liquide ou, inversement, au dégagement gazeux pouvant se produire dans certains cas.

Une telle disposition évite l'utilisation d'un compresseur d'air avec électrodes, ou l'emploi de vessies ou de membranes.

Ce type d'anti-bélier présente en outre l'avantage de fonctionner avec des liquides chargés, notamment les eaux usées ; son entretien est facile ; d'autre part, il n'a besoin pour fonctionner d'aucune source d'énergie extérieure (compresseur d'air) ni d'aucune mise sous pression préalable.

D'autres caractéristiques et avantages de l'invention ressortiront de la description qui va suivre en regard du dessin annexé représentant deux modes de réalisation préférés de l'anti-bélier conformes à l'invention :

— la figure 1 est une coupe en élévation du réservoir anti-bélier plus particulièrement destiné aux liquides chargés ;

— la figure 2 est une coupe de profil correspondant à celle de la figure 1 :

— la figure 3 est une coupe en élévation du réservoir anti-bélier destiné aux liquides non chargés.

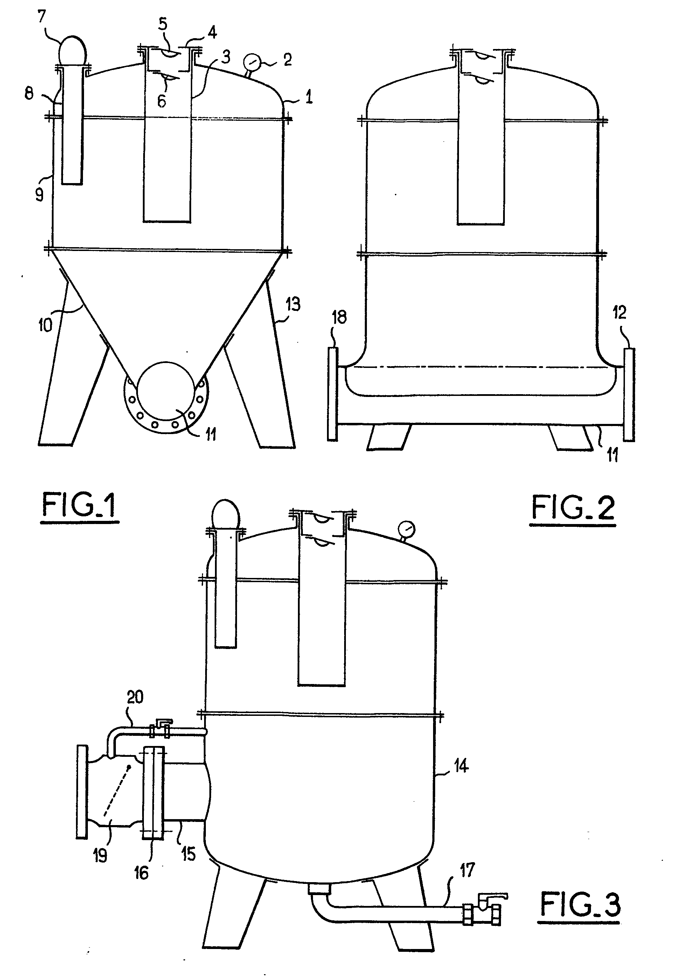

Suivant la figure 1, le dispositif anti-bélier conforme à l'invention est constitué par un réservoir comportant un couvercle elliptique 1 qui reçoit un tube plongeur principal 3 muni d'une boîte à clapets 4 contenant les soupapes 5 et 6. Sur le côté du même couvercle 1 est monté un tube plongeur secondaire 8 surmonté d'une ventouse 7 normalement fermée. Un manomètre 2 donne la pression interne. Le corps central de l'appareil 9 de hauteur variable suivant les applications relie la partie supérieure de l'appareil au bac inférieur 10 en forme de dièdre inversé. Les pieds 13 permettant une fixation au sol de l'ensemble.

Suivant la figure 2, le bac 10 reçoit à sa partie inférieure le long de l'arête du dièdre une conduite 11 ouverte dans toute sa moitié supérieure sur le bac et dont la moitié inférieure forme cunette tout le long du bac 10 (fig. 1). La liaison de l'appareil à la canalisation du fluide à réguler s'effectue par les brides 12 et 18.

La figure 3 représente une variante de l'appareil destiné plus particulièrement à être utilisé en dérivation pour les liquides non chargés. Le bac inférieur 14 reçoit une tubulure unique 15 munie d'une bride 16 permettant l'entrée et la sortie du liquide. Un clapet anti-retour 19 ainsi qu'un shunt de retour réglable 20 peuvent éventuellement être fixés sur la bride 16. Une purge 17 est montée en partie inférieure.

Le mode de fonctionnement de l'appareil est le suivant :

Si l'on considère l'exemple des figures 1 et 2 plus spécialement prévu pour la régulation des liquides chargés, l'appareil est relié à la canalisation à réguler par la bride d'entrée 12 et par la bride de sortie 18. Au remplissage de l'appareil, c'est-à-dire à la mise en marche de la pompe de refoulement, on distingue, suivant les conditions d'installation, un premier cas dans lequel le niveau du fluide est initialement en dessous du pied du tube 3 et un deuxième cas où il est au-dessus. Dans le premier cas, lors de ce remplissage, il y a d'abord montée du fluide dans le corps central 9 jusqu'au pied du tube 3.

Ensuite, le fluide continuant à monter, remplit ce tube en chassant l'air qui y était contenu ce qui provoque la fermeture de la soupape 6, d'autre part il comprime l'air emmagasiné dans la chambre limitée par le corps central 9, le couvercle 1 et le tube 3. Dans le deuxième cas, la compression commence dès le début du remplissage.

Il se produit donc un écrêtement de la surpression et ensuite le fluide à réguler prend sa pression d'équilibre. La valeur de cette pression est indiquée par le manomètre 2. La soupape 5 agit en tant que sécurité si la soupape 6 est défaillante.

Le tube plongeur 8 permet de maintenir le niveau du fluide à la hauteur désirée car si, par suite de dégagements gazeux de ce fluide, le niveau descendait et atteignait le bas du tube 8, les gaz monteraient dans ce tube et seraient évacués par la ventouse 7.

On doit remarquer cependant qu'il n'est pas toujours nécessaire d'opérer la régulation de hauteur de niveau par le tube 8. On peut donc dans certains cas le supprimer ainsi que la ventouse 7.

Lorsqu'apparaît un phénomène de dépression dans la conduite du fluide à réguler, la pression d'air existant dans la partie supérieure de l'appareil refoule le liquide vers le bas. Lorsque la pression interne atteint sensiblement la valeur de la pression atmosphérique, les soupapes 5 et 6 s'ouvrent et le liquide poursuit son écoulement à la pression atmosphérique jusqu'au remplissage complet du volume disponible provoqué par la dépression dans la conduite du fluide à réguler. C'est la fin de la phase vidange suivie de la phase de retour du fluide dans l'appareil, et le phénomène de pompage se poursuit jusqu'à la fin du régime transitoire. Il y a donc réalimentation automatique lors de chaque dépression — arrêt de pompe par exemple — de la quantité d'air exactement nécessaire dans la chambre limitée par le corps central 9, le couvercle 1 et le tube 3. La correction éventuelle à la suite d'une dissolution de l'air dans le fluide ou d'un dégagement gazeux est donc réalisée très simplement.

Lorsque la circulation du fluide reprend son cours normal, le cycle de remplissage se reproduit et l'appareil est de nouveau prêt à fonctionner.

On peut remarquer que le bac 10 de cet appareil en forme de cunette à forte pente évite que les produits en suspension dans les liquides chargés n'adhèrent aux parois.

L'exemple de la figure 3 représente une adaptation de l'appareil pour liquide non chargé. On remarquera que le fond de l'appareil est simplifié et ne comporte qu'une virole avec fond bombé. Suivant les caractéristiques de fonctionnement et de pression, la sortie 16 peut être équipée d'un clapet anti-retour 19 avec battant percé ou non, ou d'une tuyère ou d'un shunt de retour réglable 20. Le fonctionnement est identique à celui des exemples des figures 1 et 2.

Les divers avantages qui ressortent de cette invention sont les suivants :
— construction simple et peu onéreuse, aucun organe fragile ;
— entretien facile et presque nul ;
— possibilité de changement de volume et de caractéristiques de fonctionnement en modifiant la hauteur du corps central ainsi que la longueur des tubes plongeurs ;
— maintien automatique du volume d'air ;
— économie d'énergie par suppression de compresseur d'air et de tout organe électrique ou pneumatique.

L'appareil permet le dégazage de l'installation, et évite le montage d'une ventouse sur la conduite.

Il va de soi que l'invention n'a été décrite et représentée qu'à titre explicatif, nullement limitatif et que diverses modifications pourraient être apportées à la forme et aux organes de réalisation indiqués sans qu'on sorte pour cela du domaine de l'invention.

**Revendications**

1. Réservoir anti-bélier destiné à être disposé sur une conduite de liquide et muni à sa partie supérieure d'une soupape (4) de communication avec l'atmosphère, permettant à l'air de pénétrer dans le réservoir quand celui-ci est soumis à une dépression, caractérisé par ceci que le réservoir est muni d'un tube (3) plongeant, à l'intérieur duquel se trouve la soupape (4) et par lequel cette dernière communique avec l'intérieur du réservoir, la fermeture de la soupape (4) étant commandée par la poussée du liquide dans le tube (3).

2. Réservoir selon la revendication 1, caractérisé en outre par le fait qu'il comporte un tube plongeur secondaire (8) muni d'une ventouse (7) permettant l'échappement de gaz ou d'air lorsque l'air contenu dans le réservoir atteint le niveau de l'extrémité inférieure dudit tube (8).

3. Réservoir selon la revendication 1, plus particulièrement destiné à être utilisé en coopération avec des conduites d'eaux chargées, caractérisé par le fait qu'il comporte un bac en forme de dièdre inversé (10) dont l'arête est formée par une conduite (11) ouverte sur le dièdre sur toute sa longueur, et constituant une cunette par sa partie inférieure, cette conduite étant à ses extrémités limitée par des brides de raccordement à la conduite d'eau.

4. Réservoir selon la revendication 1, caractérisé par le fait qu'il est disposé en dérivation de la conduite à protéger à laquelle il est réuni par une tubulure unique (15) servant à l'entrée et à la sortie du liquide.

5. Réservoir selon la revendication 4, caractérisé par le fait que dans la tubulure de raccordement sont disposés un clapet anti-retour (19) et un shunt réglable (20).

6. Réservoir selon la revendication 1, caractérisé par le fait que la soupape disposée dans le tube plongeur est double, le second clapet agissant comme sécurité.

## Claims

1. A surge fluid damping tank designed to be installed on a liquid conduct and provided at its upper part with a valve (4) connected with the atmosphere, admitting air into the tank when said tank is under negative pressure, characterized by the fact that the tank is provided with a dip tube (3) inside which the valve (4) is placed and through which said valve communicates with the inside of the tank, the closure of the valve (4) being controlled by the thrust of the liquide in the tube (3).

2. The tank according to claim 1, further characterized by the fact that it comprises an auxiliary dip tube (8) provided with a suction device (7) letting off gas or air when the air contained in the tank reaches the level of the lower end of the said tube (8).

3. The tank according to claim 1, more specifically designed to be used in co-operation with foul-water pipings, characterized by the fact that it comprises a vessel in the shape of an inverted dihedral (10) the edge of which is formed by a pipe (11) opening into the dihedral over all its length, and constituting a trough at its lower part, this pipe being limited a both ends by flanges for connection to the water piping.

4. The tank according to claim 1, characterized by the fact that it is installed to by-pass the piping to be protected to which it is connected by a single pipe-end (15) used for the inlet and the outlet of the liquid.

5. The tank according to claim 4, characterized by the fact that a check-valve (19) and an adjustable shunt (20) are placed in the connecting pipe-end.

6. The tank according to claim 1, characterized by the fact that the valve placed in the dip tube is a double-flap valve, the second flap acting as a safety means.

## Ansprüche

1. Behälter zur Verhinderung von Wasserschlag, der dazu bestimmt ist, auf eine Flüssigkeitsleitung aufgesetzt zu werden und der im oberen Teil ein Verbindungsventil (4) zur Aussenluft hat, das der Luft Zugang zum Behälter ermöglicht wenn in diesem Unterdruck herrscht, dadurch gekennzeichnet, dass der Behälter mit einem Tauchrohr (3) ausgerüstet ist, in dessen Inneren sich das Ventil (4) befindet und durch welches dieses letztere mit dem Behälterinneren in Verbindung steht, wobei das Schliessen des Ventils (4) durch den Flüssigkeitsschlag gesteuert wird.

2. Behälter gem. Anspruch 1, ferner dadurch gekennzeichnet, dass er ein sekundäres Tauchrohr (8) umfasst, das mit einem Entlüsftungsventil (7) ausgerüstet ist, das das Entweichen von Gaz bzw, Luft gestattet sobald die im Behälter enthaltene Luft die Höhe des unteren Endes des genannten Rohres (8) erreicht.

3. Behälter gem. Anspruch 1, der insbesondere dazu bestimmt ist, zusammen mit Abwasserleitungen eingesetzt zu werden, dadurch gekennzeichnet, dass er einen Trog in Form eines umgekehrten Zweiflachs (10) enthält, dessen Kante von einer offenen Leitung (11) gebildet wird, die in ihrer ganzen Länge gegen das Zweiflach offen ist und mit ihrem unteren Teil einen Abwasserkanal bildet, wobei diese Leitung an beiden Seiten in Verbindungsflansche zur Wasserleitung hin endet.

4. Behälter gem. Anspruch 1, dadurch gekennzeichnet, dass er abseits der zu schützenden Leitung angeordnet ist, an die er mit einem einzigen Anschlußstutzen (15) angeschlossen ist, der zur Zuführung und zur Abführung der Flüssigkeit dient.

5. Behälter gem. Anspruch 4, dadurch gekennzeichnet, dass im Anschlußstutzen ein Rückschlagventil (19) und ein regelbarer Nebenanschluss (20) angeordnet sind.

6. Behälter gem. Anspruch 1, dadurch gekennzeichnet, dass das im Tauchrohr angeordnete Ventil verdoppelt ist, wobei das zweite Ventil als Sicherheitsvorrichtung arbeitet.

FIG.1

FIG.2

FIG.3